# EUROPÄISCHE PATENTSCHRIFT

(11) **EP 2 216 562 B1**
(45) Veröffentlichungstag und Bekanntmachung des Hinweises auf die Patenterteilung: **30.10.2013**
(21) Anmeldenummer: 10150436.3
(22) Anmeldetag: 11.01.2010
(51) Int. Cl.: F16G 3/10, G01G 11/00

(54) **Fördergurt für Bunkerabzug-Gurtförderer**
Conveyor belt for bunker discharger belt conveyors
Courroie de transport pour extracteur de trémie

(30) Priorität: 06.02.2009 DE 102009003454
(43) Veröffentlichungstag der Anmeldung: 11.08.2010
(73) Patentinhaber: Babcock Borsig Steinmüller GmbH, 46047 Oberhausen (DE)
(72) Erfinder: Stiessel, Lutz, 47169 Duisburg (DE)
(74) Vertreter: Weisse, Renate

(56) Entgegenhaltungen:
- EP-A1- 0 031 420
- DD-A1- 118 716
- DE-A1- 1 920 480
- DE-A1- 4 103 233
- DE-C- 907 996

## Beschreibung

### Technisches Gebiet

Die Erfindung betrifft einen Fördergurt für Bunkerabzug-Gurtförderer für den Abzug und die Förderung von Kohle aus einem Bunker zu einer Kohlemühle, wobei der Fördergurt auf Bandrollen aufspannbar ist gemäß dem Oberbegriff des Anspruchs 1.

Die Erfindung betrifft auch ein Verfahren zum Herstellen eines solchen Fördergurts. Die Erfindung betrifft ferner einen Bunkerabzug-Gurtförderer für den Abzug und die Förderung von Kohle aus einem Bunker zu einer Kohlemühle enthaltend
(a) eine Spann- und eine Förderrolle; und
(b) eine Bandwaage zur Ermittlung des Gewichts der zur Mühle geförderten Kohle.

Für den Betrieb eines Kohlekraftwerks wird Kohle in einem Bunker oder Silo gelagert. Der Bunker kann große Mengen Kohle im 1000 t-Bereich lagern. Die gelagerte Kohle wird zu einer Mühle befördert. Dort wird die Kohle zu Kohlenstaub vermahlen und einer Feuerungsanlage zugeführt. Die dem Bunker abgezogene Kohlemenge wird vom Bunkerauslauf mittels eines Förderers zum Mühleneinlauf gefördert. Dabei wird die Kohlemenge bestimmt. Es ist Ziel der Anordnung, die Kohlemenge bzw. den Heizwert der Kohle möglichst genau zu bestimmen und einzustellen. Dadurch kann der Verbrauch und die Emissionen gesenkt werden.

### Stand der Technik

Zur Förderung der Kohle sind Trogkettenförderer und Gurtförderer bekannt. Bei Trogkettenförderern wird die Kohlemenge bestimmt, indem das Volumen der geförderten Kohlemenge ermittelt wird. Dies ist insbesondere bei veränderlichem Schüttgewicht der Kohle ungenau. Zur Verbesserung der Genauigkeit ist es bekannt, Gurtförderer einzusetzen, welche mit einer Bandwaage ausgestattet sind. Die Bandwaage ermittelt aus einem Gewichtssignal und der Bandgeschwindigkeit die Kohlemenge. Der so ermittelte Wert ist unabhängig von Änderungen des Schüttgewichts.

Gurtförderer umfassen zwei Bandrollen: eine Förderrolle und eine Spannrolle. Um die Rollen ist ein Fördergurt gespannt. Ein typischer Fördergurt ist mehrere Meter lang und bis zu einem Meter breit. Der Fördergurt läuft dann mit Geschwindigkeiten im Bereich von 0,01 bis 0,1 m/s um. Dabei wird die Kohle zur Mühle gefördert. Der Fördergurt umfasst einen Gummigurt mit mehreren Schichten aus Gummi und Gewebeeinlagen. Weiterhin umfasst der Fördergurt seitliche, auf der Tragseite des Gummigurts aufvulkanisierte Kanten. Solche Kanten können wellenförmig geformt sein, so dass sie sich beim Umlaufen um die Rollen entsprechend stauchen und spreizen lassen. Die Kanten halten die Kohle auf dem Gummigurt.

Der Gummigurt läuft als geschlossenes Endlosband auf den Rollen. Die Enden des Gummigurtes sind daher an einer Verbindungsstelle miteinander verbunden. Die Verbindung von Gummigurten erfolgt durch Vulkanisieren und Aufbringen von Gummilösung. Bekannte Fördergurte haben einen Gummigurt, dessen Enden mittels einer Haftgummieinlage verbunden werden, welche über etwa einen halben Meter Verbindungslänge zwischen überlappenden Enden mittels der Gummilösung fixiert wird. Die Enden werden also quasi überlappend miteinander verklebt. Zur Vermeidung von Kanten auf den Oberflächen, werden Ausnehmungen ausgeschnitten, in welche Übergangsstücke eingesetzt werden.

Es ist ferner bekannt, Haftgummieinlagen bei Schleuderbändern zu verwenden, damit die Verbindungsstelle den bei Schleuderbändern üblichen, hohen Geschwindigkeiten im Bereich von 3m/s standhält.

EP 0031 420 A1 offenbart ein Verfahren zur Herstellung einer Verbindungsstelle an Fördergurten. Der Fördergurt besteht aus drei Gummilagen und dazwisschenliegenden Zugträgereinlagen aus einem Gewebe. Zur Verbindung wird ein Endabschnitt der Zwischengummilage herausgetrennt und in den frei gewordenen Raum eine Verbindungsplatte aus Kautschuk eingelegt, so dass der Gurt eine einheitliche Dicke aufweist.

DD 118 716 A1 offenbart eine Zutellerbandwaage für Futtermittel bei schwankenden Massedurchsätzen. Der Gummifördergurt ist mit Gewebeeinlagen versehen. Die Waage arbeitet mit einem Traggurtband und beidseitig angeordnete Zuggurtbänder. Die Geschwindigkeit der Bänder wird der geförderten Masse angepasst.

DE 41 03 233 A1 offenbart ein Verfahren zum Verbinden der Enden eines Vorschubbandes für eine Bandschleifmaschine. Das Vorschubband weist eine textile Festigkeitsträgerlage in einem elastomeren Werkstoff auf. An der Verbindungsstelle wird ein Füllstück eingelegt. Die Verbindungsstelle wird anschließend zusammenvulkanisiert.

DE 907 996 C offenbart ein Förderband aus Gummi mit Draht- oder Drahtlitzeneinlagen und ein Verfahren zum Verbinden der Enden derselben.

DE 1920 480 offenbart ein Verfahren für die Verbindung der Enden von Gummigurten mit Gewebeverstärkungslagen. Dabei wird eine Zwischengummischicht eines Endes entfernt und in den so entstehenden Schlitz die durch die Entfernung der übrigen Lagen allein überstehende Zunge einer der Gewebelage des anderen Endes eingeschoben und durch Vulkanisation verbunden.

### Offenbarung der Erfindung

Es ist Aufgabe der Erfindung, einen Bunkerabzug-Gurtförderer und einen Fördergurt der eingangs genannten Art zu schaffen, mit welchem der Kohleverbrauch und die Emissionen gesenkt werden. Erfindungsgemäß wird die Aufgabe durch die Merkmale des Kennzeichens des Anspruchs 1 gelöst.

Es hat sich überraschenderweise herausgestellt, dass Gurtförderer mit Bandwaage eine signifikant genauere Dosierung erlauben, wenn ein Gummigurt eingesetzt wird, der eine homogene Dichteverteilung aufweist. Diese homogene Dichteverteilung wird dadurch erreicht, dass die Verbindungsprofile nicht einfach überlappend aufeinandergeklebt werden und die Haftgummieinlage sandwich-artig dazwischen liegt. Stattdessen werden stufenförmige Verbindungsprofile verwendet, welche Ausnehmungen zur Aufnahme der Haftgummieinlage aufweisen. Die Haftgummieinlage hat eine Dichte, welche im wesentlichen der Dichte der Schicht entspricht, welche die Ausnehmung aufweist. Dann bleibt die Dichte über die gesamte Länge gleich. Das an der Bandwaage vorbeilaufende Bandgewicht (Eigengewicht) bleibt auch im Bereich der Verbindungsstelle konstant. Die homogene Dichtevertellung entlang der Länge des Bandes erlaubt die genaue Dosierung und durch eine exaktere Regelung des Feuerungsprozesses eine Reduktion des Kohleverbrauchs und der damit einhergehenden Emissionen.

Dabei befindet sich die Haftgummieinlage in einer Ausnehmung in einer der mittleren Schichten und weist einen Wulst auf, welcher sich in eine korrespondierende Ausnehmung in einer benachbarten Schicht erstreckt. Der Wulst kann einen rechteckigen Querschnitt aufweisen. Vorzugsweise ist jeweils eine Wulst an jedem Ende der Haftgummieinlage vorgesehen. In einer weiteren Ausgestaltung der Erfindung ist die Haftgummieinlage im Bereich der Wulst mit einer weiteren Haftgummieinlage verbunden, welche sich in einer Ausnehmung befindet, die in einer zur Schicht mit der Wulst benachbarten Schicht angeordnet ist.

Die Verbindung kann mittels Gummilösung und Vulkanisierung durch Erwärmen hergestellt werden. Die Haftgummieinlagen haben einen niedrigeren Schmelz- und/oder Vulkanisierungspunkt als die Gummischichten. Zum Herstellen der Verbindung werden die Enden des Gummigurtes zusammengefügt, wobei die Haftgummieinlagen dazwischenliegen. Ferner wird eine Gummilösung als "Kleber" auf die Verbindungsstellen aufgetragen. Durch Zusammenführen und/oder Zusammendrücken und Erwärmen der Verbindungsstelle wird eine in den Schichten homogene, feste Verbindung erreicht.

In einer bevorzugten Ausgestaltung der Erfindung erstrecken sich die Verbindungsprofile und die Haftgummieinlage gleichmäßig über die gesamte Breite des Fördergurts. Damit wird die Homogenität innerhalb jeder Schicht nicht nur über die Länge, sondern auch über die Breite des Gummigurtes erreicht.

In einer weiteren Ausgestaltung der Erfindung weist wenigstens eines der Verbindungsprofile auf der äußersten Schicht eine Ausnehmung auf, in welcher eine äußere Einlage aus dem Schichtmaterial der äußersten Schicht eingefügt und mittels Gummilösung und Vulkanisierung durch Erwärmen mit dem Band verbunden ist. Dabei kann die Ausnehmung für die äußere Einlage sich im Bereich der weiteren Haftgummieinlage befindet. Die erste Haftgummieinlage wird also zunächst zwischen den Enden eingelegt und mit diesen verbunden. Anschließend wird jeweils eine weitere Haftgummieinlage im Bereich der Wulst angelegt. Hierfür ist eine Ausnehmung vorgesehen, welche von außen bis zur Wulst reicht. Auf die verbleibende Ausnehmung wird die äußere Einlage aufgelegt. Die äußere Einlage besteht aus dem gleichen Material, wie die äußerste Schicht des Gummigurts. Durch die äußere Einlage wird eine glatte Oberfläche erreicht.

In einer konkreten Ausgestaltung der Erfindung sind sieben Schichten vorgesehen, von denen die äußere und jede zweite dazwischenliegende Schicht aus Gummi besteht, die von der Tragseite her gezählt zweite Schicht mit einer Gewebeeinlage versehen ist und die Ausnehmung für die Haftgummieinlage in der von der Tragseite her gezählt fünften Schicht vorgesehen ist. Die Tragseite ist die Seite, auf welcher die Kohle gefördert wird.

Das Herstellen eines Fördergurts für Bunkerabzug-Gurtförderer für den Abzug und die Förderung von Kohle aus einem Bunker zu einer Kohlemühle, wobei der Fördergurt auf Bandrollen aufspannbar ist und einen Gummigurt mit mehreren Schichten aus Gummi und Gewebeeinlagen umfasst, enthält erfindungsgemäß die Schritte:
(a) Herstellen eines stufenförmiges Verbindungsprofils an zwei Enden des Gummigurts;
(b) Verbinden der Enden des Gummigurtes miteinander mittels einer Haftgummieinlage derart, dass der Fördergurt ein geschlossenes Endlosband bildet, wobei
(c) die stufenförmigen Verbindungsprofile an den Enden des Gummigurtes miteinander korrespondieren, wobei zumindest eines der Verbindungsprofile eine Ausnehmung zur Aufnahme der Haftgummieinlage aufweist, so dass der Gummigurt über die gesamte Länge die gleiche Dicke aufweist, und
(e) die Haftgummieinlage eine Dichte hat, welche der Dichte der Schicht entspricht, welche die Ausnehmung zur Aufnahme der Haftgummieinlage aufweist.

Der Fördergurt eignet sich erfindungsgemäß insbesondere für einen Bunkerabzug-Gurtförderer für den Abzug und die Förderung von Kohle aus einem Bunker zu einer Kohlemühle enthaltend
(a) eine Spann- und eine Förderrolle; und
(b) eine Bandwaage zur Ermittlung des Gewichts der zur Mühle geförderten Kohle, wobei
(c) der Fördergurt auf die Spann- und auf die Förderrolle aufgespannt ist und mit der Bandwaage zusammenwirkt.

Ausgestaltungen der Erfindung sind Gegenstand der Unteransprüche. Ein Ausführungsbeispiel [Ausführungsbeispiele] ist nachstehend unter Bezugnahme auf die beigefügten Zeichnungen näher erläutert.

### Kurze Beschreibung der Zeichnungen

- Fig.1: ist eine schematische Darstellung eines Bunkerabzug-Gurtförderers im Querschnitt.
- Fig.2: zeigt den Fördergurt an der Verbindungsstelle vor der Verbindung im Detail;
- Fig.3: zeigt den Fördergurt aus Fig.2 während der Verbindung im Detail.
- Fig.4: illustriert die äußere Form des Fördergurts aus Fig.2

### Beschreibung des Ausführungsbeispiels

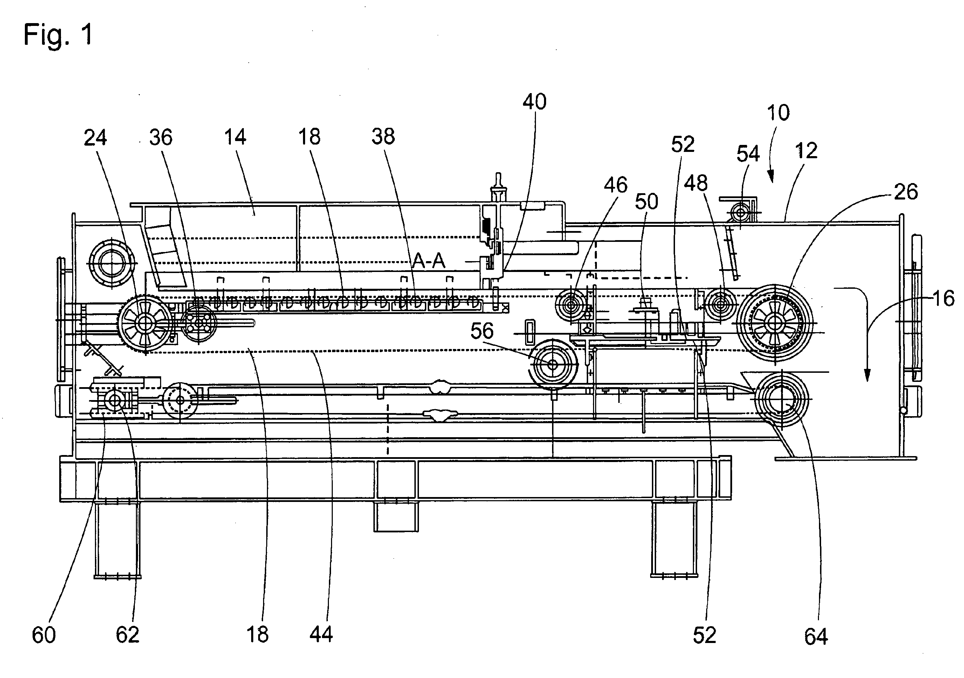

Figur 1 zeigt einen Bunkerabzug-Gurtförderer, der allgemein mit "Förderer" 10 bezeichnet ist. Der Bunkerabzug-Gurtförderer 10 weist ein im wesentlichen rohrförmiges Gehäuse 12 auf. Im oberen Bereich des Gehäuses 12 ist ein Einlauf 14 vorgesehen. Durch den Einlauf 14 tritt Kohle, insbesondere unvermahlene Steinkohle, aus einem Kohlebunker (nicht dargestellt) nach unten in den Förderer 10. Mit dem nachstehend beschriebenen Förderer 10 wird die Kohle entlang des Pfeils 16 in eine Kohlemühle (nicht dargestellt) befördert.

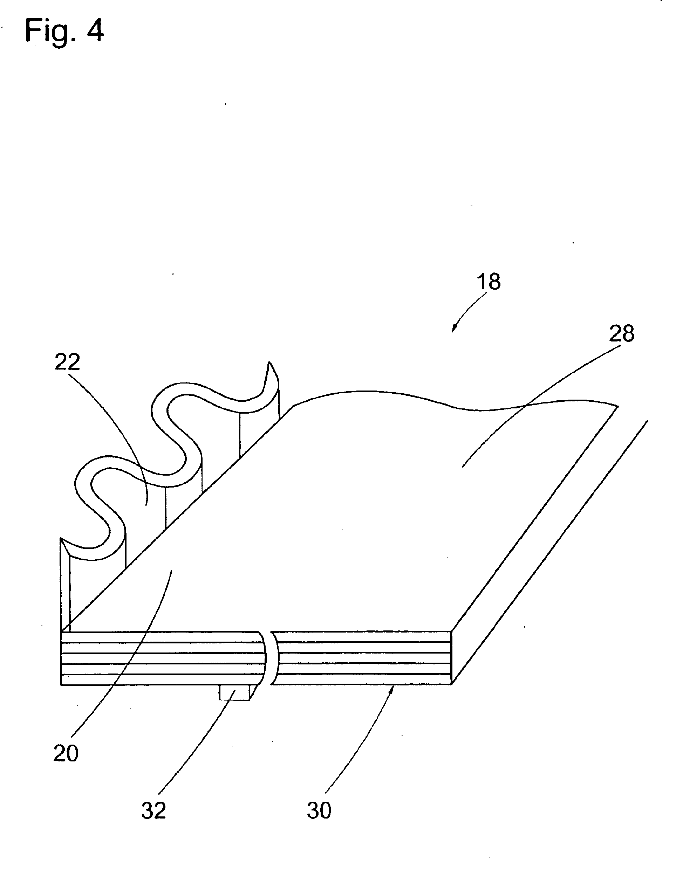

Kohle, die aus dem Bunker nach unten gelangt, fällt auf einen Fördergurt 18. Die Form des Fördergurts 18 ist ausschnittsweise in Fig. 4 dargestellt. Der Fördergurt 18 umfasst einen planen Gummigurt 20. Der Gummigurt 20 besteht im wesentlichen aus einem planen Band aus sieben Schichten aus Gummi und Gewebeeinlagen. Beidseitig über die gesamte Länge des Bandes sind seitliche Wellkanten 22 ebenfalls aus Gummi vorgesehen. Die Wellkanten sind durch Vulkanisieren mit dem Gummigurt 20 verbunden. Die Krümmungsachsen der Wellen der Wellkanten 20 erstrecken sich im wesentlichen senkrecht zur Oberfläche des Gummigurts 20. Die Wellkanten 20 sind auf der Tragseite 28, d.h. auf der Seite, auf welcher die Kohle auf dem Band aufliegt, vorgesehen. Der Ausschnitt in Fig. 4 zeigt nur eine von zwei Wellkanten. Mit den Wellkanten 20 wird die Kohle auf dem Band gehalten. Die Wellenform ermöglicht ein Stauchen und Entzerren der Kanten beim Umlauf um die mit 24 und 26 bezeichneten Rollen (s.Fig.1).

Auf der Laufseite 30, d.h. der der Tragseite 28 gegenüberliegenden Seite 30 ist eine über die gesamte Länge erstreckende Trapezführungsleiste 32 anvulkanisiert. Die Trapezführungsleiste 32 wird in Umfangsnuten in den Rollen 24 und 26 geführt. Auf diese Weise wird ein Schräglaufen des Fördergurts 18 verhindert.

Die in Fig.1 mit 24 bezeichnete Spannrolle wirkt mit einem Kegelradgetriebe 36 zusammen. Die Umlaufachse der Spannrolle 24 ist in horizontaler Richtung beweglich gelagert. Der Fördergurt 18 kann so gespannt werden. Im Bereich der Kohlezufuhr wird der Fördergurt 18 von einem Rollentisch 38 gestützt. Die gegenüberliegende Rolle 26 dient als Antriebsrolle und wird mittels einer Antriebsstation angetrieben. Über die Rotationsgeschwindigkeit der Antriebsrolle wird die Bandgeschwindigkeit eingestellt.

Die geförderte Kohlemenge kann zusammen mit einem Schichthöhenbegrenzer 40 eingestellt werden. Der Schichthöhenbegrenzer 40 ist im wesentlichen ein einstellbares Blech, welches die durchgelassene Kohle auf eine ausgewählte Höhe begrenzt. Wenn das Blech nach oben bewegt wird, wird mehr Kohle durchgelassen.

Die Kohle wird in Figur 1 auf der Oberseite von links nach rechts gefördert. Der Fördergurt 18 ist als Endlosgurt ausgebildet und läuft im unteren Bereich 44 wieder zurück von rechts nach links in Figur 1. Hinter dem Schichthöhenbegrenzer 40 wird der Fördergurt 18 über zwei Oberband-Tragrollen 46 und 48 geführt. Zwischen den Oberband-Tragrollen 46 und 48 ist der Sensor 50 einer Bandwaage 52 vorgesehen. Die Bandwaage 52 mit dem Sensor 50 weist einen Dehnungsmesser auf, welcher das über den Sensor laufende Gewicht in ein elektrisches Signal wandelt. Das Signal repräsentiert ein zeitnahes Signal der geförderten Kohlemasse.

Die Anordnung weist ferner einen Kohlefehlmelder 54 und eine Unterband-Tragrolle 56 auf. Unterhalb des Fördergurts 18 ist eine Räumvorrichtung 58 vorgesehen. Die Räumvorrichtung weist eine Gabellaschenkette 60 zum Räumen von herabgefallenen Kohleresten auf. Die Gabellaschenkette 60 läuft über eine Spannrolle 62 und eine Antriebsrolle 64.

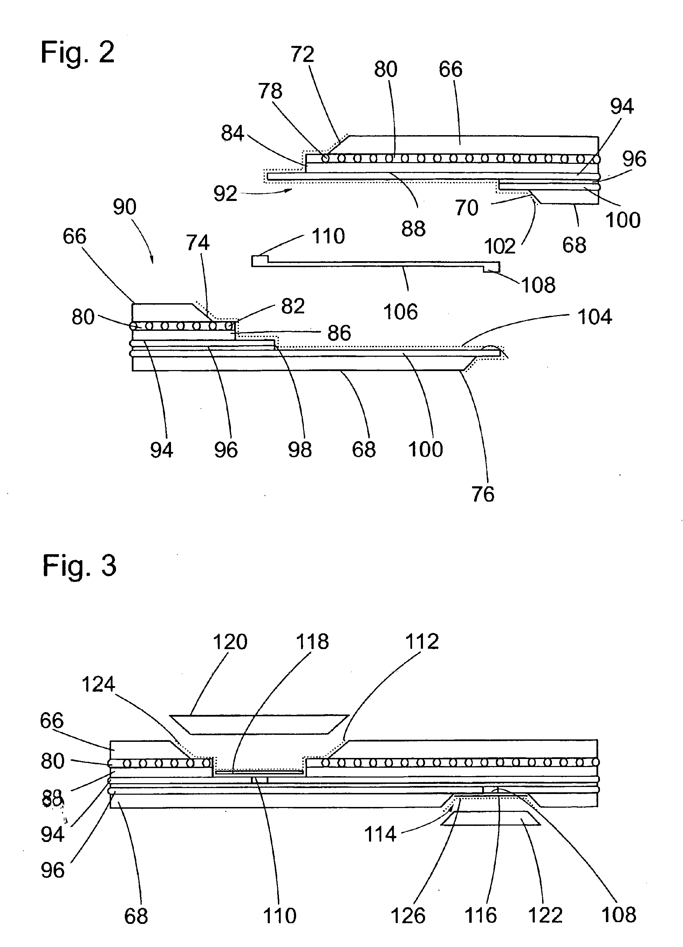

Der Gummigurt 20 besteht im vorliegenden Fall aus sieben Gummi- bzw. Gewebe-Schichten. Der Gummigurt 20 wird an einer Verbindungsstelle zu einem Endlosgurt verbunden. Die Verbindungsstelle ist in Figur 2 und 3 im Detail dargestellt. Zunächst werden die Enden mit einem Profil versehen. Die äußersten Schichten 66 und 68 werden mit einer schräg zur Mitte der Verbindungsstelle zulaufenden Kante 70, 72 einerseits und 74, 76 andererseits versehen. Die darunterliegende Gewebeschicht 80 ragt an Stellen 78 und 82 etwas über die Kante heraus. Die unter der Gewebeschicht 80 liegende Gummischicht 88 hat die gleiche Länge, so dass die dadurch gebildete Kante 84 und 86 beidseitig bündig abschließt.

Das Ende 90 des Gummigurts weist darunter zwei Schichten 94 und 96 gleicher Länge auf, so dass eine weitere bündige Kante 98 gebildet wird. Die Kante 98 ragt etwas über die Kante 86 hinaus. Zwischen der Schicht 68 und der Schicht 96 ist eine Schicht 100 vorgesehen. Am Ende 90 ist die Schicht 100 sehr lang, so dass ein Plateau gebildet ist. Die Schicht 100 ragt ein wenig über die Schicht 76 hinaus und steht am meisten vor.

Am anderen Ende 92 des Gummigurts ist hingegen die Schicht 94 besonders lang ausgebildet und die Schichten 96 und 100 kurz. Die Profile der Enden 90 und 92 repräsentiert durch gepunktete Linien 102 und 104 sind komplementär und lassen sich zusammensetzen, so dass die Schichten 68, 100, 96, 94, 80 und 66 im wesentlichen durchgängig sind. Lediglich die Schicht 96 ist beidseitig wesentlich und die benachbarten Schichten 100 und 94 ein wenig kürzer ausgebildet. Dadurch werden beim Zusammenfügen Ausnehmungen gebildet. Die Ausnehmungen, d.h. im Bereich oberhalb des Plateaus 102 und an den Kanten 98, dienen als Aufnahme für eine Hafteinlage 106. Die Hafteinlage 106 liegt an der Verbindungsstelle zwischen den Enden 90 und 92 auf der Höhe der Schicht 96. Die Hafteinlage 106 weist auf der Seite des Endes 92 eine nach unten ragende Wulst 108 und auf der anderen Seite eine nach oben ragende Wulst 110 auf. Die Kanten der Schichten sind so ausgebildet, dass die Wulst gerade in die benachbarten Schichten 94 und 100 passt. Dies ist in Figur 3 ersichtlich, bei welcher die Enden 90 und 92 bereits zusammengefügt sind.

Die äußersten Schichten 66 und 68 und darunterliegenden Schichten bilden in zusammengefügtem Zustand, Fig.3, zusätzliche, äußere Ausnehmungen 112 und 114. Beide äußeren Ausnehmungen 112 und 114 erstrecken sich durch alle Schichten bis zu der Wulst 108 bzw. 110. Eine weitere Hafteinlage 116 wird in die Ausnehmung 114 eingelegt. Eine Hafteinlage 118 ist in die Ausnehmung 112 eingelegt. Die Hafteinlagen 116 und 118 sind wie die Hafteinlage 106 und die Wülste 108, 110 aus einem Gummi, welches bei niedriger Temperatur vulkanisiert. Auf diese Weise werden die Enden 90 und 92 miteinander durch Erwärmen der zusammengefügten Verbindungsstelle quasi miteinander "verklebt". Für eine eine gleichmäßige Oberfläche werden anschließend äußere Einlagen 120 und 122 in die Ausnehmungen 112 bzw. 114 eingefügt. Dabei wird an den durch die punktierten Linien 102, 104 und 124, 126 repräsentierten Profilen die Verbindung mittels einer Gummilösung hergestellt.

Die Hafteinlagen und die Gummilösung haben eine Dichte, welche gewährleistet, dass sich die Dichte entlang des Fördergurtes auch an der Verbindungsstelle (Fig.2 und 3) nicht ändert. Zusammen mit der Tatsache, dass die gleiche Schichtstruktur in jedem Punkt besteht, wird erreicht, dass die Gewichtsmessung unabhängig von der Lage des Gurtes bzw. der Verbindungsstelle ist. Auf diese Weise wird die Genauigkeit der zugeführten Kohlemasse erhöht.

## Patentansprüche

1. Fördergurt (18) für Bunkerabzug-Gurtförderer (10) für den Abzug und die Förderung von Kohle aus einem Bunker zu einer Kohlemühle, wobei der Fördergurt (18) auf Bandrollen (24, 26) aufspannbar ist, enthaltend
(a) einen Gummigurt (20) mit mehreren Schichten (66, 68, 80. 86, 94, 96) aus Gummi und Gewebeeinlagen; und
(b) eine Verbindungsstelle, an welcher zwei Enden (90, 92) des Gummigurtes (20) ein stufenförmiges Verbindungsprofil (102, 104) aufweisen und mit einer Haftgummieinlage (106) derart verbunden sind, dass der Fördergurt (18) ein geschlossenes Endlosband bildet, wobei
(c) die stufenförmigen Verbindungsprofile (102, 104) an den Enden (90, 92) des Gummigurtes (20) miteinander korrespondieren, wobei zumindest eines der Verbindungsprofile (102, 104) eine Ausnehmung zur Aufnahme der Haftgummieinlage (106) aufweist, so dass der Gummigurt (20) über die gesamte Länge die gleiche Dicke aufweist,
(d) die Haftgummieinlage (106) eine Dichte hat, welche der Dichte der Schicht (96) entspricht, welche die Ausnehmung zur Aufnahme der Haftgummieinlage aufweist; und
(e) die Haftgummieinlage (106) sich in einer Ausnehmung in einer der mittleren Schichten befindet
**dadurch gekennzeichnet, dass**
(f) seitliche, auf der Tragseite des Gummigurts aufvulkanisierte Kanten (22) vorgesehen sind; und
(g) die Haftgummieinlage (106) eine Wulst (108, 110) aufweist, welche sich in eine korrespondierende Ausnehmung in einer benachbarten Schicht erstreckt, wobei die Haftgummieinlage (106) im Bereich der Wulst (108, 110) mit einer weiteren Haftgummieinlage (116, 118) verbunden ist, welche sich in einer Ausnehmung (112, 114) befindet, die in einer zur Schicht mit der Wulst benachbarten Schicht angeordnet ist.

2. Fördergurt nach Anspruch 1, **dadurch gekennzeichnet, dass** jeweils eine Wulst (108, 110) an jedem Ende der Haftgummieinlage (106) vorgesehen ist.

3. Fördergurt nach einem der vorgehenden Ansprüche, **dadurch gekennzeichnet, dass** die Verbindungsprofile (102, 104) und die Haftgummieinlage (106) sich gleichmäßig über die gesamte Breite des Fördergurts (18) erstrecken.

4. Fördergurt nach einem der vorgehenden Ansprüche, **dadurch gekennzeichnet, dass** die Verbindung mittels Gummilösung und Vulkanisierung durch Erwärmen hergestellt wurde.

5. Fördergurt nach einem der vorgehenden Ansprüche, **dadurch gekennzeichnet, dass** wenigstens eines der Verbindungsprofile auf der äußersten Schicht (66, 68) eine Ausnehmung (112, 114) aufweist, in welcher eine äußere Einlage (120, 122) aus dem Schichtmaterial der äußersten Schicht eingefügt und mittels Gummilösung und Vulkanisierung durch Erwärmen mit dem Band verbunden ist.

6. Fördergurt nach Anspruch 5, **dadurch gekennzeichnet, dass** die Ausnehmung für die äußere Einlage (120, 122) sich im Bereich der weiteren Haftgummieinlage (116, 118) befindet.

7. Fördergurt nach einem der vorgehenden Ansprüche, **dadurch gekennzeichnet, dass** sieben Schichten vorgesehen sind, von denen die äußere und jede zweite dazwischenliegende Schicht aus Gummi besteht, die von der Tragseite her gezählt zweite Schicht mit einer Gewebeeinlage versehen ist und die Ausnehmung für die Haftgummieinlage in der von der Tragseite (28) her gezählt fünften Schicht vorgesehen ist.

8. Verfahren zum Herstellen eines Fördergurts für Bunkerabzug-Gurtförderer nach einem der vorgehenden Ansprüche für den Abzug und die Förderung von Kohle aus einem Bunker zu einer Kohlemühle, wobei der Fördergurt auf Bandrollen aufspannbar ist und einen Gummigurt mit mehreren Schichten aus Gummi und Gewebeeinlagen umfasst, enthaltend die Schritte:
(a) Herstellen eines stufenförmiges Verbindungsprofils an zwei Enden des Gummigurts; und
(b) Verbinden der Enden des Gummigurtes miteinander mittels einer Haftgummieinlage derart, dass der Fördergurt ein geschlossenes Endlosband bildet; wobei
(c) die stufenförmigen Verbindungsprofile an den Enden des Gummigurtes miteinander korrespondieren, wobei zumindest eines der Verbindungsprofile eine Ausnehmung zur Aufnahme der Haftgummieinlage (106) aufweist, so dass der Gummigurt (20) über die gesamte Länge die gleiche Dicke aufweist,
(d) die Haftgummieinlage (106) eine Dichte hat, welche der Dichte der Schicht entspricht, welche die Ausnehmung zur Aufnahme der Haftgummieinlage aufweist; und
(e) die Haftgummieinlage (106) sich in einer Ausnehmung in einer der mittleren Schichten befindet;
**dadurch gekennzeichnet, dass**
(f) die Haftgummieinlage eine Wulst (108, 110) aufweist, welche sich in eine korrespondierende Ausnehmung in einer benachbarten Schicht erstreckt, wobei die Haftgummieinlage (106) im Bereich der Wulst (108, 110) mit einer weiteren Haftgummieinlage (116, 118) verbunden ist, welche sich in einer Ausnehmung (112, 114) befindet, die in einer zur Schicht mit der Wulst benachbarten Schicht angeordnet ist.

9. Bunkerabzug-Gurtförderer (10) für den Abzug und die Förderung von Kohle aus einem Bunker zu einer Kohlemühle enthaltend
(a) eine Spann- und eine Förderrolle (24, 26); und
(b) eine Bandwaage (50, 52) zur Ermittlung des Gewichts der zur Mühle geförderten Kohle;
**gekennzeichnet durch**
(c) einen Fördergurt (18) nach einem der Ansprüche 1 bis 7, der auf die Spann-und auf die Förderrolle aufgespannt ist und mit der Bandwaage zusammenwirkt.

## Claims

1. Conveyor belt (18) for bunker discharger belt conveyors (10) for discharging and conveying coal from a bunker to a coal mill, wherein the conveyor belt (18) is adapted to be clamped on conveyor drums (24, 26), comprising
(a) a rubber belt (20) with several layers (66, 68, 80, 86, 94, 96) made of rubber and fabric lining; and
(b) a joint, where two ends (90, 92) of the rubber belt (20) are provided with a cascaded connection profile (102, 104) and connected with an adhesive rubber lining (106) in such a way that the conveyor belt (18) forms a closed endless belt, wherein
(c) the cascaded connection profile (102, 104) at the ends (90, 92) of the rubber belt (20) correspond to each other, wherein at least one of the connection profiles (102, 104) is provided with a gap for receiving the adhesive rubber liner (106) in such a way that the rubber belt (20) has the same thickness along its entire length,
(d) the adhesive rubber liner (106) has a density corresponding to the density of the layer (96) comprising the gap for receiving the adhesive rubber liner; and
(e) the adhesive rubber liner (106) is positioned in a gap in one of the central layers;
**characterized in that**
(f) lateral edges (22) which are vulcanised onto the carrying side of the rubber belt; and
(g) the adhesive rubber liner (106) is provided with a beading (108, 110) extending in a corresponding gap in the adjacent layer.

2. Conveyor belt according to claim 1, **characterized in that** one beading (108, 110) is provided at each end of the adhesive rubber liner (106).

3. Conveyor belt according to anyone of the preceding claims, **characterized in that** the connection profiles (102, 104) and the adhesive rubber liner (106) evenly extend along the entire width of the conveyor belt (18).

4. Conveyor belt according to anyone of the preceding claims, **characterized in that** the joint is produced by means of a rubber solution and vulcanizing by heating.

5. Conveyor belt according to claim 5, **characterized in that** at least one of the connection profiles is provided with a gap (112, 114) in the outermost layer (66, 68), an outer liner (120, 122) made of layer material of the outermost layer being inserted therein and connected to the belt by means of a rubber solution and vulcanizing by heating.

6. Conveyor belt according to claim5, **characterized in that** the gap for the outer liner (120, 122) is positioned in the range of the further adhesive rubber liner (116, 118).

7. Conveyor belt according to any of the preceding claims, **characterized in that** seven layers are provided, the outer and each second layer therebetween made of rubber, the second layer counted from the carrying side is provided with a fabric lining and the gap for the adhesive rubber lining is provided in the fifth layer counted from the carrying side (28).

8. Method for producing a conveyor belt for bunker discharger belt conveyors for discharging and conveying coal from a bunker to a coal mill, wherein the conveyor belt is adapted to be clamped on conveyor drums and comprising a rubber belt with several layers of rubber and fabric lining, comprising the steps of:
(a) Producing a cascaded connection profile at two ends of the rubber belt; and
(b) Joining the ends of the rubber belt by means of an adhesive rubber liner in such a way that the conveyor belt forms a closed enless belt; wherein
(c) the cascaded connection profiles correspond at the ends of the rubber belt with each other, wherein at least one of the connection profiles is provided with a gap for receiving the adhesive rubber liner (106) in such a way that the rubber belt (20) has the same thicknes along its entire length;
(d) the adhesive rubber liner (106) has a density corresponding to the density of the layer comprising the gap for receiving the adhesive rubber liner; and
(e) the adhesive rubber liner (106) is positioned in a gap in one of the central layers;
**characterized in that**
(f) the adhesive rubber liner is provided with a beading (108, 110) extending in a corresponding gap in the adjacent layer, wherein the adhesive rubber liner (106) in the range of the beading (108, 110) is connected to another adhesive rubber liner (116, 118) extending in a gap (112, 114) provided in a layer next to the layer with the beading..

9. Bunker discharger belt conveyor (10) for discharging and conveying coal from a bunker to a coal mill, comprising
(a) a clamping- and a conveyor drum (24, 26); and
(b) a belt weigher (50, 52) for determining the weight of the coal conveyed to the mill;
**characterized by**
(c) a conveyor belt (18) according to any of the claims 1 to 7, clamped on the clamping and on the conveyor drum and cooperating with the belt weigher.

## Revendications

1. Bande transporteuse (18) pour convoyeur à bande d'évacuation de silo (10) pour l'évacuation et le transport du charbon d'un silo vers un broyeur de charbon, la bande transporteuse (18) pouvant être montée sur des rouleaux de bande (24, 26), comprenant
(a) une bande en caoutchouc (20) présentant plusieurs couches (66, 68, 80, 86, 94, 96) de caoutchouc et de garnitures textiles ; et
(b) une jonction au niveau de laquelle deux extrémités (90, 92) de la bande en caoutchouc (20) présentent un profil de jonction échelonné (102, 104) et sont reliées l'une à l'autre à l'aide d'une garniture en caoutchouc adhésif (106) de sorte que la bande transporteuse (18) forme une bande fermée sans fin,
(c) les profils de jonction échelonnés (102, 104) correspondant l'un à l'autre aux extrémités (90, 92) de la bande de caoutchouc (20), au moins l'un des deux profils de jonction (102, 104) présentant un évidement destiné à loger la garniture de caoutchouc adhésif (106) de sorte que la bande en caoutchouc (20) présente la même épaisseur sur toute sa longueur,
(d) la garniture de caoutchouc adhésif (106) présentant une épaisseur correspondant à l'épaisseur de la couche (96) comportant l'évidement destiné à loger la garniture de caoutchouc adhésif ; et
(e) la garniture de caoutchouc adhésif (106) se trouvant dans l'une des couches médianes,
**caractérisée en ce que**
(f) il est prévu des bords latéraux (22) rapportés par vulcanisation sur la face porteuse de la bande en caoutchouc ; et
(g) la garniture de caoutchouc adhésif (106) présente un renflement (108, 110) s'étendant dans un évidement correspondant situé dans une couche adjacente, la garniture de caoutchouc adhésif (106) étant reliée dans la zone du renflement (108, 110) à une garniture de caoutchouc adhésif supplémentaire (116, 118) se trouvant dans un évidement (112, 114) disposé dans une couche adjacente à la couche comportant le renflement.

2. Bande transporteuse selon la revendication 1, **caractérisée en ce qu'**à chaque extrémité de la garniture de caoutchouc adhésif (106), il est prévu à chaque fois un renflement (108, 110).

3. Bande transporteuse selon l'une quelconque des revendications précédentes, **caractérisée en ce que** les profils de jonction (102, 104) et la garniture de caoutchouc adhésif (106) s'étendent de manière homogène sur toute la largeur de la bande transporteuse (18).

4. Bande transporteuse selon l'une quelconque des revendications précédentes, **caractérisée en ce que** la jonction est réalisée au moyen d'une dissolution de caoutchouc et par vulcanisation à chaud.

5. Bande transporteuse selon l'une quelconque des revendications précédentes, **caractérisée en ce qu'**au moins l'un des profils de jonction présente sur la couche du dessus (66, 68) un évidement (112, 114) dans lequel est insérée une garniture extérieure (120, 122) composée du même matériau que la couche du dessus et reliée à la bande au moyen d'une dissolution de caoutchouc et par vulcanisation à chaud.

6. Bande transporteuse selon la revendication 5, **caractérisée en ce que** l'évidement destiné à la garniture extérieure (120, 122) se trouve dans la zone de la garniture de caoutchouc adhésif supplémentaire (116, 118).

7. Bande transporteuse selon l'une quelconque des revendications précédentes, **caractérisée en ce qu'**il est prévu sept couches dont la couche extérieure ainsi que chaque seconde couche intermédiaire se compose de caoutchouc, la seconde couche en partant de la face porteuse est pourvue d'une garniture textile et l'évidement destiné à la garniture de caoutchouc adhésif est prévu dans la cinquième couche en partant de la face porteuse (28).

8. Procédé pour la fabrication d'une bande transporteuse pour convoyeur à bande d'évacuation de silo, selon l'une quelconque des revendications précédentes, pour l'évacuation et le transport du charbon d'un silo vers un broyeur de charbon, la bande transporteuse pouvant être montée sur des rouleaux de bande et comprenant une bande en caoutchouc présentant plusieurs couches de caoutchouc et de garnitures textiles, comprenant les étapes de :
(a) fabrication d'un profil de jonction échelonné à deux extrémités de la bande en caoutchouc ; et
(b) jonction des extrémités de la bande en caoutchouc entre elles au moyen d'une garniture de caoutchouc adhésif de sorte que la bande transporteuse forme une bande fermée sans fin ;
(c) les profils de jonction échelonnés correspondant l'un à l'autre aux extrémités de la bande de caoutchouc, au moins l'un des deux profils de jonction présentant un évidement destiné à loger la garniture de caoutchouc adhésif (106) de sorte que la bande en caoutchouc (20) présente la même épaisseur sur toute sa longueur,
(d) la garniture de caoutchouc adhésif (106) présentant une épaisseur correspondant à l'épaisseur de la couche comportant l'évidement destiné à loger la garniture de caoutchouc adhésif ; et
(e) la garniture de caoutchouc adhésif (106) se trouvant dans l'une des couches médianes ;
**caractérisé en ce que**
(f) la garniture de caoutchouc adhésif (106) présente un renflement (108, 110) s'étendant dans un évidement correspondant situé dans une couche adjacente, la garniture de caoutchouc adhésif (106) étant reliée dans la zone du renflement (108, 110) à une garniture de caoutchouc adhésif supplémentaire (116, 118) se trouvant dans un évidement (112, 114) disposé dans une couche adjacente à la couche comportant le renflement.

9. Convoyeur à bande d'évacuation de silo (10) pour l'évacuation et le transport du charbon d'un silo vers un broyeur de charbon, comprenant
(a) un rouleau tendeur et un rouleau de transport (24, 26) ; et
(b) une balance de convoyeur (50, 52) destinée à déterminer le poids du charbon transporté vers le broyeur ;
**caractérisé par**
(c) une bande transporteuse (18), selon l'une quelconque des revendications 1 à 7, montée sur le rouleau tendeur et le rouleau de transport et fonctionnant avec le concours de la balance de convoyeur.
